Europäisches Patentamt

European Patent Office

Office européen des brevets

(11) Publication number: **0 277 381 B1**

## EUROPEAN PATENT SPECIFICATION

(45) Date of publication of patent specification: **04.03.92**

(51) Int. Cl.5: **C08L 35/06**, C08L 77/00, C08L 55/02, C08L 23/08

(21) Application number: **87202550.7**

(22) Date of filing: **16.12.87**

(54) **Thermoplastic polymer mixtures.**

(30) Priority: **20.12.86 NL 8603245**

(43) Date of publication of application:
**10.08.88 Bulletin  88/32**

(45) Publication of the grant of the patent:
**04.03.92 Bulletin  92/10**

(84) Designated Contracting States:
**AT BE CH DE ES FR GB IT LI NL SE**

(56) References cited:
**US-A- 3 966 839**

(73) Proprietor: **DSM N.V.**
**Het Overloon 1**
**NL-6411 TE Heerlen(NL)**

(72) Inventor: **Schepers, Herman Augustinus Johannes**
**Leenstraat 33**
**NL-6171 LC Stein (L.)(NL)**
Inventor: **Debets, Wilhelmus Antonius Maria**
**Dr. Philipsstraat 91**
**NL-6136 XX Sittard(NL)**

(74) Representative: **Hoogstraten, Willem Cornelis Roeland et al**
**OCTROOIBUREAU DSM Postbus 9**
**NL-6160 MA Geleen(NL)**

## Description

The invention relates to a new thermoplastic polymer mixture based on a copolymer of a vinyl-aromatic compound and maleic anhydride, a graft copolymer based on a vinyl-aromatic compound and acrylonitrile, a polyamide and an ethylene polymer with acid or anhydride groups in the side chains.

Graft copolymers of a vinyl-aromatic compound and acrylonitrile on a butadiene rubber (ABS) are used for many plastics applications in which properties like impact-resistance are of primary importance. ABS is used, for example, for the production of casings for various electrial equipment, but also for the production of certain car parts.

A composition of styrene graft copolymers mixed with polyamides, made compatible by the addition of extra acrylamide, is known from the US patent specification US-A-4.496.690. Such blends are only reasonable impact-resistant if they contain an excess of the graft copolymer.

A polymer composition of a polyamide resin, a polystyrene resin and up to 5 wt.% of a styrene maleic anhydride copolymer is described in US-A-3.966.839. The impact-resistance of such a composition is however inadequate.

Polymer compositions based on ABS, styrene-maleic anhydride copolymer and a polyamide are described in the patent DE-A-3.120.803. By using a low-molecular styrene maleic-anhydride copolymer (SMA) a polymer composition is obtained which shows satisfactory impact-resistance per se, but the thermal stability of such a composition is inadequate. There is a need for a polymer composition with an optimum balance of properties like impact-resistance, thermal stability (Vicat, HDT), insentivity to moisture, resistance to decomposition, processstability, etc.

The aim of the invention is to provide a polymer composition which has such an optimum balance.

The polymer composition according to the invention is characterized in that the composition comprises:

a) 20-75 wt% of a graft copolymer of styrene and/or $\alpha$-methyl styrene together with acrylonitrile on a rubber, which graft copolymer contains 10-90 wt% rubber;

b) 6-50 wt% of a copolymer of a vinyl-aromatic compound containing 15-40 wt% maleic anhydryde, with a molecular weight of 50,000-5000,000;

c) 5-70 wt% polyamide

d) 0.1-50 wt% flexible ethylene polymer with acid or anhydride groups in the side chains;

e) 0-30 wt% of a copolymer of a vinyl-aromatic compound and acrylonitrile, which copolymer contains 20-40 wt.-% acrylonitrile.

Surprisingly, it has now been found that a combination of these components in the polymer composition results in good thermal stability, combined with good impact-resistance, excellent mechanical and processing properties and, in particular, improved weather-resistance and UV-resistance.

The polymer composition according to the invention contains with advantage:

a) 25-60 wt% styrene and/or $\alpha$-methylstyrene and acrylonitrile on a butadiene rubber, with a rubber content of preferable 20-80 wt%;

b) 7.5-40 wt% styrene copolymer and maleic anhydride, with a maleic anhydride content of preferable 20-32 wt%, the molecular weight of the copolymer preferable being 100,000 to 300,000;

c) 20-55 wt% polyamide;

d) 0.1-30 wt% flexible ethylene polymer with acid or anhydride groups in the side chains;

e) 0-30 wt% of a copolymer of styrene and acrylonitrile, which copolymer contains 20-40 wt.-% acrylonitrile.

The graft copolymer applied in the polymer composition according to the invention consits of a graft copolymer of styrene and or $\alpha$-methylstyrene and acrylonitrile on a rubber.

The rubber is preferable chosen from the group consisting polybutadiene, butadiene-styrene rubber, butadiene acrylate rubber, butadiene acrylonitrile rubber, EPT and EPDM or mixtures of two or more of these rubbers. The rubber content of the entire composition should preferable be 20-40 wt%.

The graft copolymer can be prepared in the customary manner, e.g. by mass, solution or suspension polymerization. It is also possible to combine two or more of these polymerization methods to, e.g., mass solution polymerization, mass suspension polymerization or emulsion suspension polymerization. Polymerization is preferably effected in the presence of the customary subtances, such as free radical donors, optionally in combination with a redox system, chain length regulators, stabilizers, suspending agents, emulsifiers, and the like.

The copolymer of styrene and maleic anhydride to be used according to the invention shall have a high molecular weight of 50,000 - 5000,000, preferably 100,000 - 300,000. The maleic anhydride content is 15-40 wt%, preferably 20-32 wt%. The upper limit of the maleic anhydride content is determined by the processability of the copolymer, while the advantages of high-molecular SMA are practically non-existent below the lower limit. The copolymer can be produced in the manner commonly applied for the production of statistical, non-alternating copolymers of styrene and maleic anhydride. A possible procedure is described in Hanson and Zimmerman, Ind. Chem. Eng. Vol. 49, No. 11, November 1957, 1803 through 1807. It is in any case advantageous that the polymerization is carried out continuously, under well-mixed conditions, because otherwise an alternating copolymer of styrene and maleic anhydride is obtained, sometimes in combination with a styrene homopolymer. The copolymer of styrene and maleic anhydride may contain 0.1-5 wt% of other monomers like acrylonitrile or methylmethacrylate and imides like N-phenyl maleimide. However, this is not necassary. EP-A-202706 describes the preparation of high-molecular SMA in detail.

The polyamides used in the composition according to the invention are known per se, notably the conventional polyamide resins, known under the name of nylon, including the aliphatic polylactams like polycaprolactam, nylon 6. Nylon 4.6, nylon 6.6, nylon 6.10, nylon 11 and nylon 12 may also be used. In addition, copolyamides, aromatic nylons and semi-aromatic nylons may be used.

Flexible ethylene polymers with acid or anhydride groups in the side chains are understood to be (I) ethylene copolymers with $\alpha$-olefins, like propylene. A third and/or fourth monomer like ethylide-nenorbornene, dicylopentadiene and 1,4-hexadiene may have been used. These are known as EP(DM) rubbers. The anhydride or acid groups are applied by grafting with maleic anhydride. (II) Polyethylene as homopolymer, if require with small amounts of $\alpha$-olefins, known as HDPE (high-density polyethylene), LDPE (low-density polyethylene) and LLDPE (linear low-density polyethylene), grafted with maleic anhydride. (III) Ethylene polymers as described in (I) and (II), but grafted with a styrene maleic anhydride complex. (IV) Ehtylene copolymers as described in (I) and (II), but grafted with polymer chains (grafts) composed of olefins containing acid or anhydride groups, if required with a comonomer, for example, grafts of styrene-acrylic acid copolymer. (V) Ethylene copolymer with $\alpha$-olefins containing acid groups possibly partially neutralized with metal ions, e.g. ethylene acrylic acid copolymer.

The graft polymers refered to above can be produced either in the polymer melt (roll mills, extruders) or in solution, with or without the addition of peroxide according to know techniques. During or after production they may be diluted with polyolefins. Their stiffness is less than half of that of the known SAN copolymers. The main chain is saturated and therefore these products are extremely oxidation- and UV-resistant. The blends made impact-resistant show excellent ageing behaviour at high temperatures in air and are weather-resistant.

The copolymers of styrene and or $\alpha$-methylstyrene with acrylonitrile that may be used are the known styrene-acrylonitrile (SAN) and or $\alpha$-methylstyrene-acrylonitrile ($\alpha$-MSAN) copolymers. The copolymer can be produced in the common manner, for example by emulsion polymerization, mass polymerisation and suspension polmerization, mass polymerization and suspension polymerization or a combination thereof. The copolymers are high-molecular and contain 20-40 wt% acrylonitrile. They may contain small amounts of other comonomers like acrylates.

In addition, the polymer composition according to the invention contains at most 40 wt% of the usual additives, for example, colourants, pigments, flame retardants, stabilizers, lubricants, fillers, inorganic fillers, etc.

The polymer composition can be produced by mixing the various components in the melt. The known mixing devices like roll mils, batch kneaders and extruders may be used for this purpose. The composition of the mixture may be adapted by experts, according to the intended application. An increased styrene maleic-anhydride copolymer content results in improved stiffness at higher temperatures. An increase in the graft copolymer content results in higher impact-resistance. The product then becomes less fluid, which can be compensated for by adding extra styrene-acrylonitrile copolymer. Both copolymers improve the mixture's sensitivity to moisture and mould shrinkage. The polyamide improves the resistance to organic solvents and wear-resistance. A person skilled in the art can also improve other properties by adapting the composition of the mixture.

The polymer composition according to the invention is extremely suitable for the production of various objects, which on the one hand require reasonable stiffness and, on the other, high UV- or weather-resistance, like parts of electrial equipment, but also garden furniture or sports articles.

The invention is further elucidated with the help of the following examples, without, however, being limited thereto.

Examples

Procedure

The following were fed to a batch kneader (Brabender PLE 330, with a volume of 50 ml:

1. polyamide; nylon 6 Ultramid B3® BASF.
2. ABS; ABS graft copolymer, containing 40 % butadiene rubber and based on the SAN phase, 27 wt% acrylonitrile.
3. SMA-1; 33 wt% MA, Mv 1700
SMA-2; 14 wt% MA, Mv 200,000
SMA-3; 22 wt % MA, Mv 200,00
SMA-4; 28 wt% MA, Mv 160,000
4. Flexible ethylene copolymer, Keltaflex 3A®, DSM (KF)
5. Styrene-acrylonitrile copolymer (SAN), containing 27 wt%. acrylonitrile.
6. Stabilizers and lubricants like
0.45 wt% stabilizer, di-stearylthiodiprorionate
0.45 wt% stabilizer, 1,1-bis- (5-tert. butyl-4-hydroxy-2--methylphenyl)butane
0.1 wt% boric acid
1 wt% lubricant, oxidized polyethylene wax.

this was mixed for 10 minutes, at a temperature of 230°C and a speed of 30 RPM. The mixture was then compression moulded for 12 minutes, at 230°C, into 3 mm thick plates. Of the plates thus obtained the following was determined:

1. Izod at 230°C, according to ISO 180 (KJ/m$_2$), after vacuum drying for 24 hours, at 60°C.
2. HDT, annealed, according to ASTM D 648 (°C), at 1.8 MPa.

Table 1 lists the components produced and also presents a survey of the properties measured.

TABLE 1

| Example | Nylon % | ABS % | SMA-1 % | SMA-2 % | SMA-3 % | SMA-4 % | KF % | SAN % | Izod KJ/m$^2$ | HDT °C | Rubber % |
|---|---|---|---|---|---|---|---|---|---|---|---|
| 1 | 40.0 | 49.0 | - | - | - | 10.0 | 1.0 | - | 64 | 101 | 20.6 |
| 2 | 35.0 | 47.0 | - | - | - | 15.0 | 3.0 | - | 53 | 112 | 21.8 |
| 3 | 25.0 | 25.0 | - | - | - | 40.0 | 10.0 | - | 20 | 125 | 20.0 |
| 4 | 40.0 | 42.5 | - | - | - | 7.5 | 5.0 | 5.0 | 50 | 96 | 22.0 |
| 5 | 55.0 | 20.0 | - | - | - | 10.0 | 15.0 | - | 25 | 99 | 23.0 |
| A* | 40.0 | 50.0 | - | - | - | 5.0 | 5.0 | - | 9 | 93 | 25.0 |
| 6 | 37.5 | 50.0 | - | - | - | 7.5 | 5.0 | - | 54 | 96 | 25.0 |
| 7 | 40.0 | 37.5 | - | - | - | 12.5 | 10.0 | - | 62 | 101 | 25.0 |
| 8 | 28.0 | 31.5 | - | - | - | 28.0 | 12.5 | - | 44 | 110 | 25.1 |
| B* | 37.5 | 37.5 | 12.5 | - | - | - | 12.5 | - | 4 | 91 | 27.5 |
| C* | 37.5 | 37.5 | - | 12.5 | - | - | 12.5 | - | 9 | 98 | 27.5 |
| 9 | 37.5 | 37.5 | - | - | 12.5 | - | 12.5 | - | 72 | 98 | 27.5 |
| 10 | 37.5 | 37.5 | - | - | - | 12.5 | 12.5 | - | 71 | 101 | 27.5 |
| 11 | 20.0 | 25.0 | - | - | - | 35.0 | 20.0 | - | 27 | 111 | 30.0 |
| 12 | 23.0 | 56.8 | - | - | - | 12.5 | 7.7 | - | 62 | 101 | 30.3 |
| 13 | 25.0 | 25.0 | - | - | - | 20.0 | 30.0 | - | 25 | 108 | 40.0 |

* A, B, C: not according to the invention, in these cases the good combination of HDT and Izod aimed at, was not obtained.

## Claims

## Claims for the following Contracting States : AT, BE, CH, DE, FR, GB, IT, LI, NL, SE

**1.** Polymer composition based on a copolymer of a vinyl-aromatic compound and maleic anhydride, a graft copolymer based on a vinyl-aromatic compound and acrylonitrile, a polyamide and a flexible ehtylene polymer with acid or anhydride groups in the side chains, characterized in that the polymer composition comprises:

a) 20-75 wt% of a graft copolymer of styrene and/or α-methylstyrene together with acrylonitrile on a rubber, which graft copolymer contains 10-90 wt% rubber;

b) 6-50 wt% of a copolymer of a vinyl-aromatic compound containing 15-40 wt% maleic anhydride, with a molecular weight of 50,000-5000,000;
c) 5-70 wt% polyamide;
d) 0.1-50 wt% flexible ethylene polymer with acid or anhydride groups in the side chains;
e) 0-30 wt% of a copolymer of a vinyl-aromatic compound and acrylonitrile, which copolymer contains 20-40 wt.-% acrylonitrile.

2. Polymer composition according to claim 1, characterized in that it comprises:
a) 25-60 wt% styrene and/or α-methylstyrene-acrylonitrile polymer on a rubber, which graft copolymer contains 20-80 wt% rubber;
b) 7.5-40 wt% styrene maleic-anhydride copolymer;
c) 20-55 wt% polyamide;
d) 0.1-30 wt% flexible ethylene polymer with acid or anhydride groups in the side chains;
e) 0-30 wt% copolymer of styrene and acrylonitrle.

3. Polymer composition according to any one claims 1 or 2, characterized in that the styrene maleic-anhydride copolymer contains 20-32 wt% maleic anhydride.

4. Polymer composition according to any one of claims 1-3, characterized in that the molecular weight of the styrene anhydride copolymer is 100,000 - 300,000.

5. Polymer composition according to any one of claims 1-4, characterized in that it contains 20-40 wt% rubber, based on the entire composition.

6. Object entirely or partially manufactured from a polymer composition according to one or more of claims 1-5.

**Claims for the following Contracting State : ES**

1. Process for the preparation of a polymer composition based on a copolymer of a vinyl-aromatic compound and maleic anhydride, a graft copolymer based on a vinyl-aromatic compound and acrylonitrile, a polyamide and a flexible ethylene polymer with acid or anhydride groups in the side chains, characterized in that the polymer composition comprises:
a) 20-75 wt% of a graft copolymer of styrene and/or α-methylstyrene together with acrylonitrile on a rubber, which graft copolymer contains 10-90 wt% rubber;
b) 6-50 wt% of a copolymer of a vinyl-aromatic compound containing 15-40 wt% maleic anhydride, with a molecular weight of 50,000 - 5.000.000;
c) 5-70 wt% polyamide;
d) 0.1-50 wt% flexible ethylene polymer with acid or anhydride groups in the side chains;
e) 0-30 wt% of a copolymer of a vinyl-aromatic compound and acrylonitrile, which copolymer contains 20-40 wt.-% acrylonitrile.

2. Process for the preparation of a polymer composition according to claim 1, characterized in that comprises:
a) 25-60 wt% styrene and/or α-methylstyrene-acrylonitrile copolymer on a rubber, which graft copolymer contains 20-80 wt% rubber;
b) 7.5-40 wt% styrene maleic-anhydride copolymer;
c) 20-55 wt% polyamide;
d) 0.1-30 wt% flexible ethylene polymer with acid or anhydride groups in the side chains;
e) 0-30 wt% copolymer of styrene and acrylonitrile.

3. Process for the preparation of a polymer composition according to any one of claims 1 or 2, characterized in that the styrene maleic-anhydride copolymer contains 20-32 wt% maleic anhydride.

4. Process for the preparation of a polymer composition according to any one of claims 1-3, characterized in that the molecular weight of the styrene anhydride copolymer is 100,000 - 300,000.

5. Process for the preparation of a polymer composition according to any one of claims 1-4, characterized in that it contains 20-40 wt% rubber, based on the entire composition.

5

6. Object entirely or partially manufactered from a polymer composition according to one or more claims 1-5.

**Revendications**

**Revendications pour les Etats contractants suivants : AT, BE, CH, DE, FR, GB, IT, LI, NL, SE**

1. Composition polymère à base d'un copolymère d'un composé vinyl-aromatique et d'anhydrique maléique, d'un copolymère greffé à base d'un composé vinylique-aromatique et d'acrylonitrile, d'un polyamide et d'un polymère éthylénique flexible avec des groupes acide ou anhdyride dans les chaînes latérales, caractérisée en ce que la composition polymère renferme :

   a) de 20 à 75 % en poids d'un copolymère greffé de styrène et/ou d'$\alpha$-méthyl-styrène conjointement avec de l'acrylonitrile sur un caoutchouc, de copolymère greffé renfermant de 10 à 90 % en poids de caoutchouc ;

   b) de 6 à 50 % en poids d'un copolymère d'un composé vinyl-aromatique renfermant de 15 à 40 % en poids d'anhydride maléique, avec un poids moléculaire de 50 000 à 5 000 000 ;

   c) de 5 à 70 % en poids de polyamide ;

   d) de 0,1 à 50 % en poids d'un polymère éthylénique flexible avec des groupes acide ou anhydride sur les chaînes latérales ;

   e) de 0 à 30 % en poids d'un copolymère d'un composé vinylique-aromatique et d'acrylonitrile, ce polymère renfermant de 20 à 40 % en poids d'acrylonitrile.

2. Composition polymère selon la revendication 1, caractérisée en ce qu'elle comprend :

   a) de 25 à 60 % en poids de styrène et/ou d'$\alpha$-méthyl-styrène et d'acrylonitrile sur un caoutchouc, ce polymère greffé renfermant de 20 à 80 % en poids de caoutchouc ;

   b) de 7,5 à 40 % en poids de copolymère de styrène-anhydride maléique ;

   c) de 20 à 55 % en poids de polyamide ;

   d) de 0,1 à 30 % en poids de polymère éthylénique flexible avec des groupes acide ou anhydride dans les chaînes latérales ;

   e) de 0 à 30 % en poids d'un copolymère de styrène-acrylonitrile.

3. Composition polymère selon l'une quelconque des revendications 1 et 2, caractérisée en ce que le copolymère de styrène-anhydride maléique renferme de 20 à 32 % en poids d'anhydride maléique.

4. Composition polymère selon l'une quelconque des revendications 1 à 3, caractérisée en ce que le poids moléculaire du copolymère de styrène-anhydride maléique est de 100 000 à 300 000.

5. Composition polymère selon l'une quelconque des revendications 1 à 4, caractérisée en ce qu'elle renferme de 20 à 40 % en poids de caoutchouc, en se basant sur la totalité de la composition.

6. Article entièrement ou partiellement fabriqué à partir d'une composition polymère selon l'une ou plus d'une des revendications 1 à 5.

**Revendications pour l'Etat contractant suivant : ES**

1. Procédé pour la préparation d'une composition polymère à base d'un copolymère d'un composé vinyl-aromatique et d'anhydrique maléique, d'un copolymère greffé à base d'un composé vinylique-aromatique et d'acrylonitrile, d'un polyamide et d'un polymère éthylénique flexible avec des groupes acides ou anhdyrides dans les chaînes latérales, caractérisée en ce que la composition polymère renferme :

   a) de 20 à 75 % en poids d'un copolymère greffé de styrène et/ou d'$\alpha$-méthyl styrène conjointement avec de l'acrylonitrile sur un caoutchouc, de copolymère greffé renfermant de 10 à 90 % en poids de caoutchouc ;

   b) de 6 à 50 % en poids d'un copolymère d'un composé vinyl-aromatique renfermant de 15 à 40 % en poids d'anhydride maléique, avec un poids moléculaire de 50 000 à 5 000 000 ;

   c) de 5 à 70 % en poids de polyamide ;

   d) de 0,1 à 50 % en poids d'un polymère éthylénique flexible avec des groupes acides ou anhydrides sur les chaînes latérales ;

   e) de 0 à 30 % en poids d'un copolymère d'un composé vinylique-aromatique et d'acrylonitrile, ce

EP 0 277 381 B1

polymère renfermant de 20 à 40 % en poids d'acrylonitrile.

2. Procédé pour la préparation d'une composition polymère selon la revendication 1, caractérisée en ce qu'elle comprend :

a) de 25 à 60 % en poids de styrène et/ou d'$\alpha$-méthyl styrène et d'acrylonitrile sur un caoutchouc butadiène, avec une teneur en caoutchouc de préférence de 20 à 80 % en poids ;
b) de 7,5 à 40 % en poids de copolymère de styrène et d'anhydride maléique, avec une teneur en anhydride maléique avantageusement de 20 à 30 % en poids, le poids moléculaire du copolymère éta ;
c) de 20 à 55 % en poids de polyamide ;
d) de 0,1 à 30 % en poids de polymère éthylénique flexible avec des groupes acides ou anhydrides dans les chaînes latérales ;
e) de 0 à 30 % en poids d'un copolymère de styrène et d'acrylonitrile, ce polymère renfermant de 20 à 40 % en poids d'acrylonitrile.

3. Procédé pour la préparation d'une composition polymère selon l'une quelconque des revendications 1 ou 2, caractérisée en ce que le copolymère de styrène-anhydride maléique renferme de 1 à 32 % en poids d'anhydride maléique.

4. Procédé pour la préparation d'une composition polymère selon l'une quelconque des revendications 1 à 3, caractérisée en ce que le poids moléculaire du copolymère de styrène-anhydride maléique est de 100 000 à 300 000.

5. Procédé pour la préparation d'une composition polymère selon l'une quelconque des revendications 1 à 4, caractérisée en ce qu'elle renferme de 20 à 40 % en poids de caoutchouc, en se basant sur la totalité de la composition.

6. Article entièrement ou partiellement fabriqué à partir d'une composition polymère selon l'une ou plus d'une des revendications 1 à 5.

**Patentansprüche**
**Patentansprüche für folgende Vertragsstaaten : AT, BE, CH, DE, FR, GB, IT, LI, NL, SE**

1. Polymerzusammensetzung basierend auf einem Copolymer einer vinylaromatischen Verbindung und Maleinsäureanhydrid, einem Pfropfcopolymer basierend auf einer vinylaromatischen Verbindung und Acrylnitril, einem Polyamid und einem flexiblen Ethylenpolymer mit Säure- oder Anhydridgruppen in den Seitenketten, dadurch gekennzeichnet, daß die Polymerzusammensetzung

a) 20 bis 75 Gew.% eines Pfropfcopolymers von Styrol und/oder $\alpha$-Methylstyrol zusammen mit Acrylnitril auf einem Kautschuk, wobei das Pfropfcopolymer 10 bis 90 Gew.% Kautschuk enthält;
b) 6 bis 50 Gew.% eines Copolymers einer vinylaromatischen Verbindung enthaltend 15 bis 40 Gew.% Maleinsäureanhydrid, mit einem Molgewicht von 50000 bis 5000000;
c) 5 bis 70 Gew.% Polyamid;
d) 0,1 bis 50 Gew.% flexibles Ethylenpolymer mit Säure- oder Anhydridgruppen in den Seitenketten;
e) 0 bis 30 Gew.% eines Copolymers einer vinylaromatischen Verbindung und Acrylnitril, wobei das Copolymer 20 bis 40 Gew.% Acrylnitril enthält;
umfaßt.

2. Polymerzusammensetzung nach Anspruch 1, dadurch gekennzeichnet, daß sie

a) 25 bis 60 Gew.% Styrol und/oder $\alpha$-Methylstyrol-Acrylnitril-Polymer auf einem Kautschuk, wobei das Pfropfcopolymer 20 bis 80 Gew.% Kautschuk enthält;
b) 7,5 bis 40 Gew.% Styrol-Maleinsäureanhydrid-Copolymer;
c) 20 bis 55 Gew.% Polyamid;
d) 0,1 bis 30 Gew.% flexibles Ethylenpolymer mit Säure- oder Anhydridgruppen in den Seitenketten;
e) 0 bis 30 Gew.% Copolymer von Styrol und Acrylnitril, umfaßt.

3. Polymerzusammensetzung nach einem der Ansprüche 1 oder 2, dadurch gekennzeichnet, daß das Styrol-Maleinsäureanhydrid-Copolymer 20 bis 32 Gew.% Maleinsäureanhydrid enthält.

7

**4.** Polymerzusammensetzung nach einem der Ansprüche 1 bis 3, dadurch gekennzeichnet, daß das Molgewicht des Styrol-Anhydrid-Copolymers 100000 bis 300000 beträgt.

**5.** Polymerzusammensetzung nach einem der Ansprüche 1 bis 4, dadurch gekennzeichnet, daß sie 20 bis 40 Gew.% Kautschuk, basierend auf der gesamten Zusammensetzung, enthält.

**6.** Gegenstand, der teilweise oder zur Gänze aus einer Polymerzusammensetzung nach einem der Ansprüche 1 bis 5 hergestellt ist.

**Patentansprüche für folgenden Vertragsstaat : ES**

**1.** Verfahren zur Herstellung einer Polymerzusammensetzung basierend auf einem Copolymer einer vinylaromatischen Verbindung und Maleinsäureanhydrid, einem Pfropfcopolymer basierend auf einer vinylaromatischen Verbindung und Acrylnitril, einem Polyamid und einem flexiblen Ethylenpolymer mit Säure- oder Anhydridgruppen in den Seitenketten, dadurch gekennzeichnet, daß die Polymerzusammensetzung

a) 20 bis 75 Gew.% eines Pfropfcopolymers von Styrol und/oder $\alpha$-Methylstyrol zusammen mit Acrylnitril auf einem Kautschuk, wobei das Pfropfcopolymer 10 bis 90 Gew.% Kautschuk enthält;

b) 6 bis 50 Gew.% eines Copolymers einer vinylaromatischen Verbindung enthaltend 15 bis 40 Gew.% Maleinsäureanhydrid, mit einem Molgewicht von 50000 bis 5000000;

c) 5 bis 70 Gew.% Polyamid;

d) 0,1 bis 50 Gew.% flexibles Ethylenpolymer mit Säure- oder Anhydridgruppen in den Seitenketten;

e) 0 bis 30 Gew.% eines Copolymers einer vinylaromatischen Verbindung und Acrylnitril, wobei das Copolymer 20 bis 40 Gew.% Acrylnitril enthält;

umfaßt.

**2.** Verfahren zur Herstellung einer Polymerzusammensetzung nach Anspruch 1, dadurch gekennzeichnet, daß sie

a) 25 bis 60 Gew.% Styrol und/oder $\alpha$-Methylstyrol-Acrylnitril-Polymer auf einem Kautschuk, wobei das Pfropfcopolymer 20 bis 80 Gew.% Kautschuk enthält;

b) 7,5 bis 40 Gew.% Styrol-Maleinsäureanhydrid-Copolymer;

c) 20 bis 55 Gew.% Polyamid;

d) 0,1 bis 30 Gew.% flexibles Ethylenpolymer mit Säure- oder Anhydridgruppen in den Seitenketten;

e) 0 bis 30 Gew.% Copolymer von Styrol und Acrylnitril, umfaßt.

**3.** Verfahren zur Herstellung einer Polymerzusammensetzung nach einem der Ansprüche 1 oder 2, dadurch gekennzeichnet, daß das Styrol-Maleinsäureanhydrid-Copolymer 20 bis 32 Gew.% Maleinsäureanhydrid enthält.

**4.** Verfahren zur Herstellung einer Polymerzusammensetzung nach einem der Ansprüche 1 bis 3, dadurch gekennzeichnet, daß das Molgewicht des Styrol-Anhydrid-Copolymers 100000 bis 300000 beträgt.

**5.** Verfahren zur Herstellung einer Polymerzusammensetzung nach einem der Ansprüche 1 bis 4, dadurch gekennzeichnet, daß sie 20 bis 40 Gew.% Kautschuk, basierend auf der gesamten Zusammensetzung, enthält.

**6.** Gegenstand, der teilweise oder zur Gänze aus einer Polymerzusammensetzung nach einem der Ansprüche 1 bis 5 hergestellt ist.